Europäisches Patentamt

European Patent Office

Office européen des brevets

(19)

(11) **EP 0 334 711 B1**

(12) **FASCICULE DE BREVET EUROPEEN**

(45) Date de publication et mention
de la délivrance du brevet:
**03.09.1997 Bulletin 1997/36**

(51) Int Cl.⁶: **G01S 13/52**

(21) Numéro de dépôt: **89400674.1**

(22) Date de dépôt: **10.03.1989**

(54) **Dispositif d'élimination du fouillis mobile dans un radar**

Gerät zur Unterdrückung von beweglichen Störechos in einem Radar

Apparatus for elimination of moving clutter in a radar

(84) Etats contractants désignés:
**DE GB IT NL**

(30) Priorité: **18.03.1988 FR 8803523**

(43) Date de publication de la demande:
**27.09.1989 Bulletin 1989/39**

(73) Titulaire: **THOMSON-CSF**
**75008 Paris (FR)**

(72) Inventeurs:
• **Coulmier, Jean-Pol**
**F-92045 Paris la Défense (FR)**
• **Kunegel, Jacques**
**F-92045 Paris la Défense (FR)**
• **Lepère, Guy**
**F-92045 Paris la Défense (FR)**

(74) Mandataire: **Benoit, Monique et al**
**THOMSON-CSF-S.C.P.I.,**
**13, Avenue du Président**
**Salvador Allende**
**94117 Arcueil Cédex (FR)**

(56) Documents cités:
EP-A- 0 132 232          EP-A- 0 153 130
GB-A- 2 044 034          GB-A- 2 074 807
US-A- 4 137 533

## Description

L'invention concerne un dispositif pour éliminer dans les signaux radar ceux correspondant à une vitesse radiale qui est faible par rapport à celle d'une large catégorie obstacles mobiles que l'on souhaite détecter.

Il est connu de mettre à profit l'effet Doppler dans les radars pour déceler les obstacles mobiles qui donnent naissance à des signaux radars de faible amplitude, au milieu d'obstacles fixes correspondant à des signaux radar de grande amplitude. Ainsi, dans les radars à impulsion du type cohérent et à fréquence de répétition Fr constante, les ondes reçues après réflexion sur les obstacles mobiles sont affectées d'une phase qui varie d'une période de répétition à la suivante alors que les ondes reçues des obstacles fixes ne présentent pas une telle variation du déphasage. De ce fait, les signaux correspondant aux obstacles mobiles ont, après démodulation, des composantes complexes qui varient sinusoïdalement à une fréquence Fd, appelée fréquence Doppler, qui est liée à la vitesse radiale v et à la longueur d'onde e du radar par la formule Fd=2v/e.

Par ailleurs, les signaux correspondant à des obstacles fixes ont une amplitude constante et leur spectre est constitué par une série de raies discrètes aux fréquences O, Fr, 2Fr... nFr tandis que le spectre des signaux correspondant à des obstacles mobiles se compose de raies discrètes du type mFr -+ Fd.

On comprend alors qu'il est possible d'éliminer les signaux correspondant aux obstacles fixes en utilisant un filtre d'élimination des échos fixes qui ne laisse pas passer les signaux de fréquences O, Fr, 2Fr...nFr.

Il est également souhaitable d'éliminer dans certains radars, tels que les radars de surveillance du trafic aérien, les obstacles mobiles qui présentent des vitesses Doppler faibles par rapport aux vitesses des échos mobiles auxquels on s'intéresse, par exemple les nuages, ou encore des obstacles fixes fluctuants qui présentent une certaine vitesse Doppler tels que les arbres agités par le vent. Ces différents échos parasites à faible vitesse sont mieux connus sous le vocable anglo-saxon de "clutter" que l'on a traduit par le terme "fouillis".

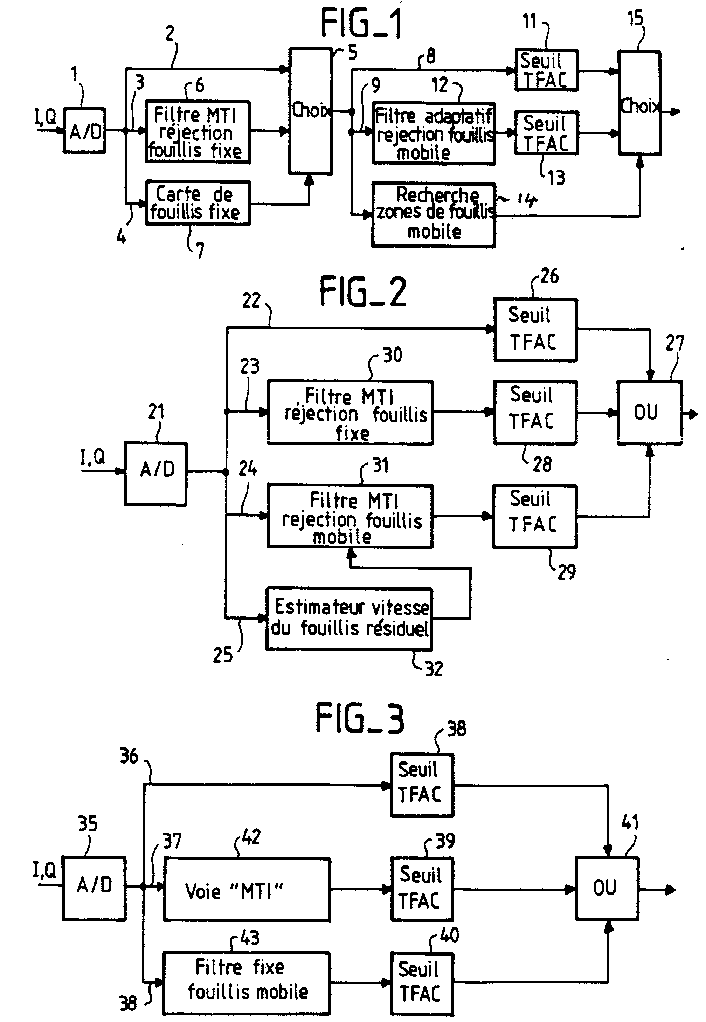

Différents systèmes sont proposés pour éliminer le fouillis mobile en même temps que le fouillis fixe. Par exemple, l'un d'entre eux est basé sur la détermination de la situation géographique de ces fouillis et la figure 1 en montre un exemple de réalisation.

Le signal radar S de composantes réelle I et imaginaire Q est, dans un convertisseur analogique numérique 1, échantillonné et l'amplitude de l'échantillon est convertie en un code numérique avant d'être appliqué à trois voies en parallèle 2, 3 et 4 qui aboutissent à un premier dispositif de sélection 5. La voie 2 correspond à une liaison directe, c'est à dire sans aucun traitement du signal et donc sans perte d'information. La voie 3 comprend un filtre d'élimination des échos fixes 6, c'est-à-dire du fouillis fixe, de type classique et la voie 4 comprend un dispositif 7 qui détermine la carte du fouillis fixe en déterminant par exemple le niveau moyen par zone du signal dû au fouillis. Cette carte du fouillis fixe sert dans le dispositif de sélection 5 à n'éliminer dans les signaux de la voie 2 que ceux provenant des zones de fouillis fixe repérées par le circuit 7.

Les signaux de sortie du dispositif 5 sont appliqués à trois voies en parallèle 8, 9 et 10 qui aboutissent à un deuxième dispositif de sélection 15. La voie 8 est une voie qui ne comporte qu'un circuit de seuil 11 du type à "taux de Fausses Alarmes Constant" (en abrégé TFAC). La voie 9 comporte un filtre de réjection du fouillis mobile 12, suivi d'un circuit de seuil TFAC 13 et la voie 10 comporte un circuit 14 de recherche des zones de fouillis mobile. Lorsque l'existence de telles zones est reconnue, le signal correspondant sert dans le dispositif de sélection 15 à n'éliminer dans les signaux de la voie 8 que ceux provenant des zones de fouillis mobile repérées par le circuit 14.

L'efficacité du système qui vient d'être décrit dépend de la précision avec laquelle on détermine les zones de fouillis fixe et mobile, c'est-à-dire du nombre de ces zones, ce qui conduit à utiliser un matériel important si l'on veut couvrir un nombre maximum de zones.

Un autre système d'élimination des fouillis fixe et mobile est basé sur la mesure de la vitesse et peut être réalisé comme le montre le schéma fonctionnel de la figure 2. Le signal radar S est appliqué à un convertisseur analogique numérique 21 analogue au convertisseur 1 de la figure 1 et les codes numériques qu'il fournit sont appliqués à quatre voies de traitement en parallèle 22 à 25 dont les trois premières 22, 23 et 24 aboutissent à un circuit OU 27. La première voie 22 ne comporte qu'un circuit de seuil TFAC 26. La deuxième voie 23 comporte un filtre d'élimination des échos fixes 30 suivi d'un circuit de seuil TFAC et la troisième voie comporte un filtre d'élimination des échos mobiles 31, également suivi d'un filtre seuil TFAC 28. La quatrième voie 25 comporte un circuit d'estimation 32 de la vitesse du fouillis mobile, information qui sert à modifier la fonction de transfert du filtre 31 de manière à l'adapter à la vitesse détectée. Avec un tel système à quatre voies en parallèle, les signaux qui sortent du circuit OU ne comprennent pas ceux correspondant aux échos fixes ni ceux correspondant au fouillis mobile.

Les performances de ce système sont liées à la précision de l'estimation de la vitesse moyenne du fouillis mobile à la taille de la fenêtre de distance utilisée par le circuit d'estimation 32 de la vitesse moyenne du fouillis mobile, et à la variation de la vitesse instantanée du fouillis mobile dans la fenêtre. En outre, le matériel à mettre en oeuvre pour réaliser un tel système peut devenir très important et donc très coûteux.

Par ailleurs, dans les deux systèmes, l'utilisation d'une wobulation, c'est-à-dire d'une variation connue de la fréquence de répétition des impulsions radar émises limite leurs performances notamment pour l'estimation de la vitesse du fouillis mobile.

Un but de la présente invention est donc de réaliser un système d'élimination du fouillis mobile dans un radar du type cohérent qui ne présente pas les inconvénients précités des systèmes de l'art antérieur , ce qui est obtenu en s'affranchissant de l'utilisation de circuits ayant pour but de déterminer les zones de fouillis mobile ou les vitesses radiales dudit fouillis mobile.

L'invention repose d'abord sur la constatation que la vitesse du fouillis mobile correspond, dans les radars de surveillance aérienne à une fréquence Doppler qui ne dépasse pas en général Fr/2 en valeur absolue, sachant qu'une fréquence Doppler positive correspond à un fouillis qui se rapproche du radar, tandis qu'une fréquence Doppler négative correspond à un fouillis qui s'éloigne du radar.

L'invention repose également sur le fait que l'on peut éliminer les signaux correspondant à ces fréquences Doppler du fouillis mobile en déplaçant la zone de réjection d'un filtre d'élimination des échos fixes du type transverse, ce qui permet d'utiliser une partie des éléments de ce filtre transverse. Ce déplacement de la zone de réjection est obtenu en modifiant uniquement les coefficients de pondération et ces coefficients modifiés ont des valeurs simples et sont donc faciles à mettre en oeuvre dans le cas de déplacement des zones de réjection de -+Fr/4.

L'invention se rapporte à un dispositif d'élimination du fouillis mobile de fréquence Doppler Fd dans un radar Doppler cohérent à impulsions de fréquence de répétition Fr dans lequel les signaux radar sont appliqués simultanément à deux voies de traitement aboutissant à un circuit OU dont l'une comporte un filtre transverse d'élimination du fouillis fixe mettant en oeuvre (n+1) coefficients multiplicateurs Ao...Aα...An suivi d'un circuit de seuil, tandis que l'autre voie ne comporte qu'un circuit de seuil, caractérisé en ce qu'il comprend en outre au moins une troisième voie de traitement aboutissant au circuit OU, cette troisième voie comportant un filtre transverse suivi d'un circuit de seuil, ledit filtre transverse étant constitué par un banc de circuits multiplicateurs dont les coefficients de multiplication sont fixes et se déduisent des coefficients Ao... Aα... An du filtre transverse d'élimination du fouillis fixe en multipliant ces derniers par un facteur :

$$F\alpha = e^{j2\pi Fd.Tr(n-\alpha)}$$

Tr étant l'inverse de la fréquence de répétition Fr des impulsions.

Dans le cas particulier où la fréquence de répétition des impulsions radar émises est wobulée, le dispositif de l'invention doit être précédé d'un circuit de compensation de cette wobulation qui consiste principalement en un circuit de multiplication par un facteur Wi qui a pour but de déphaser le signal radar.

Pour des valeurs de la fréquence Fd, égales notamment à +Fr/4 ou -F /4, les coefficients multiplicateurs Kα ou K'α sont simples et il en est de même des circuits de multiplication.

D'autres caractéristiques et avantages de la présente invention apparaîtront à la lecture de la description suivante d'un exemple particulier de réalisation, ladite description étant faite en relation avec les dessins joints dans lequel :

- la figure 1 est un schéma fonctionnel d'un système d'élimination des fouillis fixe et mobile selon l'art antérieur,
- la figure 2 est un schéma fonctionnel d'un autre système d'élimination des fouillis fixe et mobile selon l'art antérieur,
- la figure 3 est un schéma fonctionnel d'un système d'élimination des fouillis fixe et mobile selon l'invention,
- la figure4 est un schéma fonctionnel des voies de traitement 37 et 38 du système de la figure 3,
- la figure 5 est un diagramme montrant l'allure de la fonction de transfert d'un filtre transverse n'utilisant que deux coefficients,
- la figure 6 est un diagramme montrant l'allure de la fonction de transfert d'un radar à fréquence de répétition wobulée.
- la figure 7 est un schéma de réalisation de deux filtres transverses aux fréquences +Fr/4 et -Fr/4, et
- les figures 8 à 13 sont des diagrammes montrant l'allure de la fonction de transfert d'un filtre transverse dans différents cas particuliers.

Les figures 1 et 2 correspondent à l'art antérieur tel que décrit dans le préambule.

La figure 3 est un schéma fonctionnel d'un système d'élimination des fouillis fixe et mobile selon l'invention, système analogue à celui décrit en relation avec la figure 2 mais qui en diffère par l'utilisation d'un filtre d'élimination du fouillis mobile à coefficients fixes dans la troisième voie. Ce système comprend un convertisseur analogique numérique 35 à l'entrée duquel sont appliquées les composantes réelle I et imaginaire Q des signaux radars S. La sortie du convertisseur 35 est connectée à trois voies de traitement en parallèle 36, 37 et 38 qui aboutissent à un circuit OU 41 par l'intermédiaire de divers éléments qui sont différents d'une voie à l'autre. La voie 36 ne comporte qu'un circuit de seuil du type à Taux de Fausses Alarmes Constant (TFAC). La voie 37 comporte un filtre d'élimination des échos fixes 42 qui est de préférence du type transverse et un circuit de seuil TFAC. Enfin, la voie 38 comporte un filtre d'élimination du fouillis mobile 43 qui est, selon l'invention, du type transverse ainsi qu'un circuit de seuil TFAC 40.

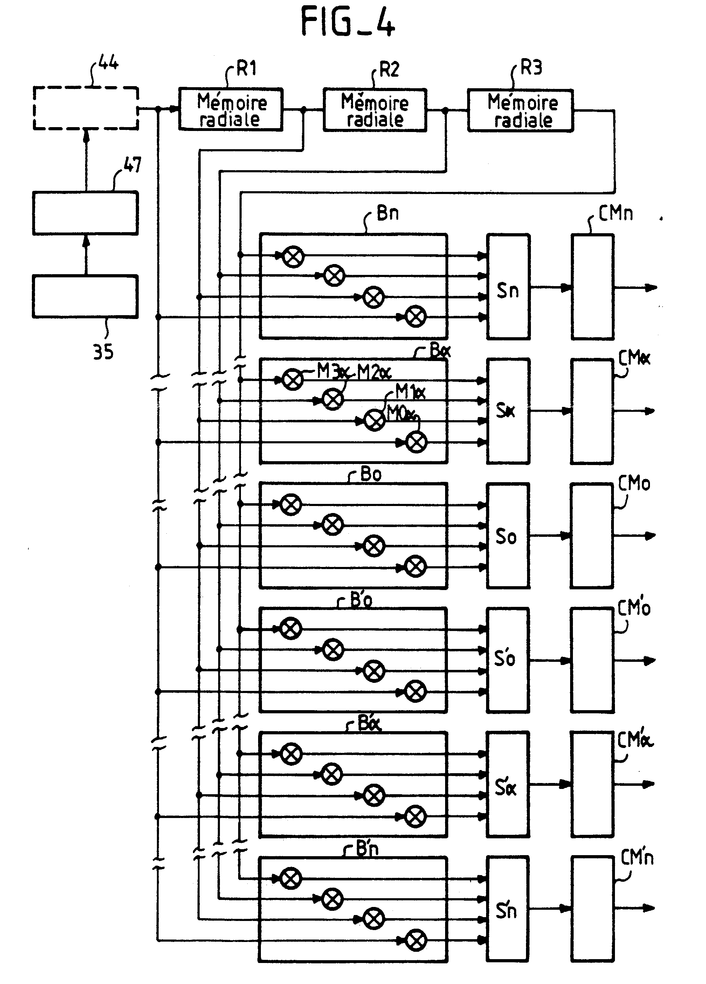

La figure 4 est un schéma fonctionnel d'un exemple particulier de réalisation des filtres d'élimination du fouillis fixe 42 et d'élimination du fouillis mobile 43 (figure 3) selon l'invention en utilisant une structure unique de filtre transverse. Dans cet exemple particulier, la structure comprend trois cellules de retard et les calculs sont effectués simultanément sur quatre échantillons ou codes correspondant à une certaine distance du radar. De manière plus précise, les codes des échantillons fournis par le convertisseur analogique numérique 35 sont enregistrés dans une première mémoire R1, qui a une capacité qui lui permet d'enregistrer tous les codes des signaux reçus au cours d'une période de répétition Tr du radar. Les codes lus dans cette mémoire R1, pour être utilisés dans la mémoire qui sera décrite ci-après sont réenregistrés dans une mémoire R2 identique à R1. De même, les codes lus dans la mémoire R2 sont réenregistrés dans une mémoire R3 identique à R1 et R2. Les mémoires R1, R2 et R3 sont lues de manière à présenter simultanément trois codes correspondant à une même tranche de distance dont un quatrième code, le plus récent, est présenté à l'entrée de la mémoire R1. L'entrée de la mémoire R1 et les sorties des mémoires R1, R2 et R3 sont connectées à des bancs de circuits multiplicateurs BO, B1,...B$\alpha$...Bn et B'O, B'1, B'$\alpha$...B'n suivis chacun d'un circuit sommateur SO, S1,...S$\alpha$...Sn ou S'0, S'1...S'$\alpha$...S'n et d'un circuit de calcul de module CMO, CM1...CM$\alpha$...CMn ou CM'O, CM'1,...CM'$\alpha$... CM'n. Chaque banc comprend quatre circuits multiplicateurs MO$\alpha$, M1$\alpha$, M2$\alpha$ et M3$\alpha$ pour le banc B$\alpha$. Pour la clarté de l'exposé, on supposera que le banc BO associé au circuit sommateur SO correspond au filtre d'élimination du fouillis fixe du côté des fréquences dites positives tandis que le banc B'O associé au circuit sommateur S'O correspond au filtre d'élimination du fouillis fixe du côté des fréquences dites négatives. De manière similaire, chaque banc B correspond à une fréquence positive tandis que chaque B' correspond à une fréquence négative.

Dans le cas du filtre d'élimination du fouillis fixe, les valeurs des coefficients multiplicateurs sont connus et seront appelés AO, A1, A2 et A3 pour le filtre de fréquence positive et A'O à A'3 pour le filtre de fréquence négative. Ces valeurs sont AO=1, A1=-3, A2=3, A3=-1, et A'0=-1, A'1=3, A'2=-3, et A'3=1.

Les coefficients de multiplication K$\alpha$ et K'$\alpha$ mis en oeuvre dans les bancs se déduisent des coefficients A ou A' en multipliant ces derniers par un facteur qui dépend de la fréquence centrale Fd du filtre et de la période Tr selon les formules :

$$K\alpha = A\alpha \; e^{j2\pi Fd.Tr(n-\alpha)}$$

et,

$$K'\alpha = A'\alpha \; e^{j2\pi Fd.Tr(n-\alpha)}$$

On démontre que, si l'on ne s'intéresse qu'aux modules des signaux, l'utilisation de ces coefficients permet de décaler la fréquence centrale du filtre d'élimination du fouillis fixe d'une valeur Fd ou -Fd et ainsi obtenir l'élimination du fouillis mobile de fréquence Doppler Fd ou - Fd.

Pour cette démonstration on fait appel à la transformée en z qui est par exemple définie dans le livre intitulé "LES FILTRES NUMERIQUES" de R. BOITE et H. LEICH et édité par MASSON en 1980 - chapitre II.

La transformée en z d'un signal à temps discret $(x_n)$ est définie par la série :

$$\sum_{n=-\infty}^{+\infty} x_n \; z^{-n} \;\; \text{notée} \;\; Z\Big[(x_n)\Big]$$

Dans le cas d'un signal radar, $x_n$ correspond à la suite des échantillons séparés l'un de l'autre d'une période de répétition Tr.

Les propriétés de la transformée en z permettent de démontrer que la fonction de transfert H(z) du filtre de la figure 4 (sans le circuit multiplicateur 44) s'écrit sous la forme :

$$H(z) = KO + K1.z^{-1} + K2.z^{-2} + K3.z^{-3} \quad (2)$$

Si l'on introduit le circuit multiplicateur 44 elle s'écrit sous la forme :

$$Hi(z) = KO.C_{i+3} + K1.C_{i+2}.z^{-1} + K2.C_{i+1}.z^{-2} + K3.C_i.z^{-3}$$

forme dans laquelle $Ci = (e^{jr)i} = (e^{j2\pi Fd.Tr)i}$

Le module de Hi (z) est alors donné par

$$Hi(z) = KO.e^{j3r} + K1.e^{j2r}.z^{-1} + K2.e^{jr}.z^{-2} + K3.z^{-3}$$

ce qui correspond à un filtre de fonction de transfert H (z) tel que :

$$H(z) = KO.e^{j3r} + K1.e^{j2r}.z^{-1} + K2.e^{jr}.z^{-2} + K3.z^{-3} \quad (3)$$

La comparaison des formules (2) et (3) montre que pour réaliser le décalage en fréquence Fd du module de la fonction de transfert, il est suffisant de modifier les coefficients des circuits multiplicateurs MO à M3 pour qu'ils deviennent :

$$K'O = KO.e^{j3r}$$

$$K'1 = K1.e^{j2r}$$

$$K'2 = K2.e^{jr}$$

K'3 = K3

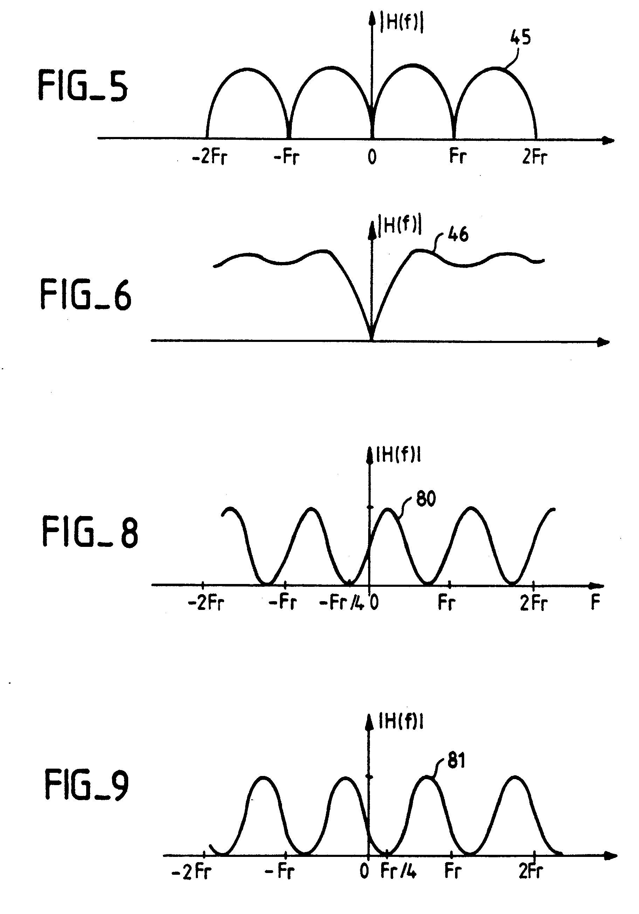

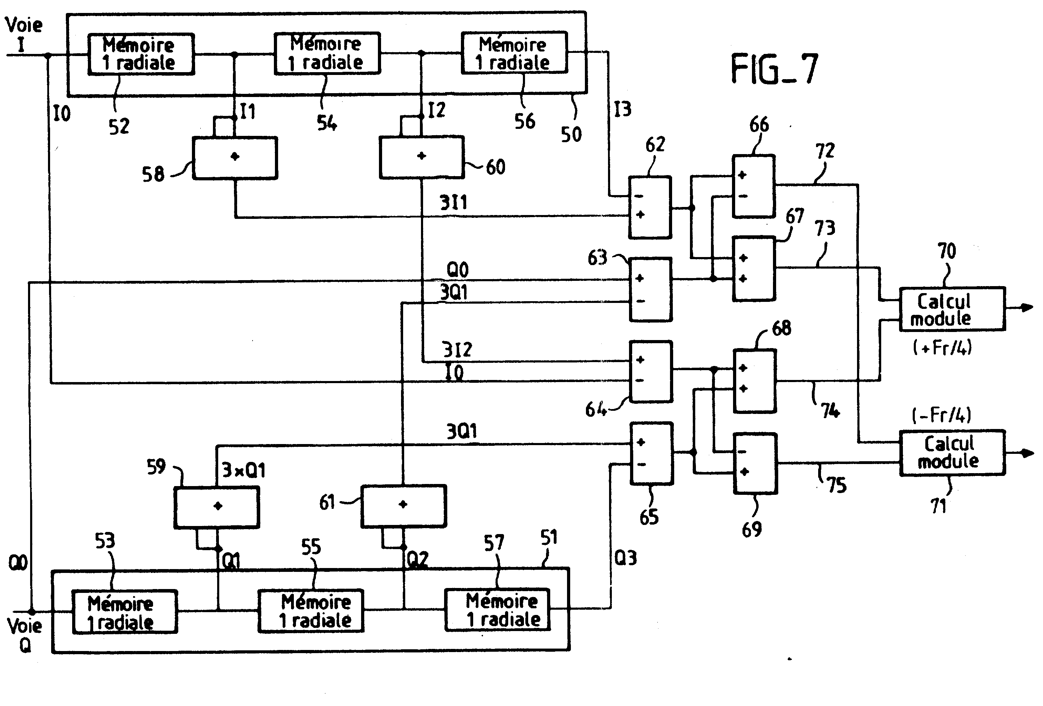

Dans certains systèmes de traitement des signaux radars, il est courant d'effectuer une première élimination du fouillis fixe en mettant en oeuvre un filtre transverse 47 (figure 4) ne comportant qu'une seule mémoire radiale. Un tel filtre a une fonction de transfert qui est donnée par la courbe 45 de la figure 5, ce qui conduit à une élimination insuffisante que l'on améliore ensuite par l'utilisation d'un filtre transverse à plusieurs cellules tel que ceux correspondant aux circuits sommateurs SO et S'O (figure 4).

De tels filtres éliminent non seulement le fouillis fixe mais aussi les cibles mobiles dont les fréquences Doppler sont des multiples entiers de la fréquence de répétition Fr. Pour éviter ces trous de détection, il est courant de faire varier la fréquence de répétition des impulsions radar émises, procédé que l'on appelle wobulation. La courbe de réponse est celle référencée 46 sur la figure 6. Lorsqu'un tel procédé est utilisé, les décalages de fréquence des filtres transverses décrits en relation avec la figure 4 ne peuvent être obtenus. Aussi, il est proposé que le filtrage transverse soit précédé d'une opération de compensation de la wobulation. Ceci est obtenu par une multiplication des codes des échantillons successifs par des coefficients Wi qui varient d'une période de répétition à la suivante. Ce coefficient Wi est donné par la formule :

$$Wi = e^{j2\pi Ti.Fr}$$

dans laquelle Ti est la durée de la période en cours ; cette multiplication correspond à un déphasage du signal radar. Il est à remarquer que la voie 36 du schéma de la Figure 3 ne comporte pas une telle compensation car elle n'est pas destinée à réjecter le fouillis fixe.

L'invention sera ci-après décrite dans des cas particuliers d'application à des radars de surveillance aérienne qui ont des longueurs d'ondes de dix centimètres (bande S) et vingt-trois centimètres (bande L) et des fréquences de répétition respectives de 900 Hertz et 340 Hertz. Dans ces cas particuliers, on montre que l'on élimine le fouillis mobile en utilisant des filtres transverses décalés de +Fr/4 et -Fr/4. Or, de tels filtres transverses peuvent être réalisés en utilisant des coefficients Kα et K'α très simples qui peuvent être choisis pour Kα parmi les quatre groupes suivants :

    -(-j, 3, 3j, -1)
    -(1, 3j, -3, -j)
    -(j, -3, -3j, 1)
    -(-1, -3j, 3, j)

et pour K'α parmi les quatre groupes suivants :

    -(j, 3, -3j, -1)
    -(1,-3j, -3, j)
    -(-j, -3, 3j, 1)
    -(-1, 3j, 3, -j)

La figure 7 est un schéma d'un exemple de réalisation du filtre 43 de la figure 3 dans le cas particulier de filtres transverses +Fr/4 et -Fr/4 ce qui conduit à utiliser les coefficients simples (-1, 3j, 3 et -j) pour Kα et (-1, -3j, 3 et j) pour K'α.

Le signal à filtrer est présenté sous la forme de ses deux composantes réelle I et imaginaire Q qui sont d'abord traitées dans deux voies séparées puis dans une partie commune. Chaque voie séparée comprend une mémoire 50 (ou 51) qui est constituée, dans le cas d'un traitement simultané sur quatre échantillons, de trois mémoires élémentaires identiques 52, 54, 56 (ou 53, 55, 57) qui sont prévues pour enregistrer chacune, dans le cas d'un signal radar, les codes des échantillons correspondant à une période de répétition Tr. Les sorties des mémoires 52 et 54 (ou 53 et 55) sont connectées respectivement à des circuits additionneurs 58 et 60 (ou 59 et 61) qui réalisent l'opération multiplication par le coefficient 3.

La partie commune comprend des circuits additionneurs 62 à 69 et deux circuits de calcul de module 70 et 71. Les circuits additionneurs 62 à 65 et 66, 69 ont une entrée directe + et une entrée complémentaire - qui réalise le complément du code qui lui est appliqué. De manière plus précise, les entrées (-) des circuits additionneurs 62 à 65 sont connectées respectivement :

-     à la sortie de la mémoire 56,
-     à la sortie du circuit additionneur 61,
-     à l'entrée de la mémoire 52,
-     à la sortie de la mémoire 57.

De même, les sorties (+) des circuits additionneurs 62 à 65 sont connectées respectivement :

-     à la sortie du circuit additionneur 58,
-     à l'entrée de la mémoire 53,
-     à la sortie du circuit additionneur 60, et
-     à la sortie du circuit additionneur 59

Chaque sortie des circuits additionneurs 62 à 65 est connectée à une des deux entrées d'un des circuits additionneurs 66 à 69. Ainsi, la sortie du circuit additionneur 62 est connectée à l'entrée (+) des circuits additionneurs 66 et 67 ; la sortie du circuit additionneur 63 est connectée à l'entrée (-) du circuit 66 et à l'entrée (+) du circuit 67; la sortie du circuit 64 est connectée à l'entrée (+) du circuit 68 et à l'entrée (-) du circuit 61 ; enfin, la sortie du circuit 65 est connectée à l'entrée (+) des circuits 68 et 69.

Les sorties 72 et 75 des circuits 66 et 69 sont connectées aux deux entrées du circuit de calcul du module 71 tandis que les sorties 73 et 74 sont connectées aux deux entrées du circuit de calcul de module 70.

Si l'on appelle respectivement IO, I1, I2 et I3 les codes des échantillons à l'entrée de la mémoire 52 et aux sorties des mémoires 52, 54 et 56 et QO, Q1, Q2 et Q3 les codes des échantillons à l'entrée de la mémoire 51 et aux sorties des mémoires 53, 55 et 57, on peut voir que l'on a les codes suivants à la sortie des circuits 66 à 69 :

- à la sortie 72 du circuit additionneur 66 :

$$- I3 + 3I1 - QO + 3Q2$$

- à la sortie 75 du circuit additionneur 69

$$- Q3 + 3Q1 + IO - 3I2 ;$$

- à la sortie 43 du circuit additionneur 67 :

$$-I3 + 3I1 + QO - 3Q2 ;$$

- à la sortie 74 du circuit additionneur 68 :

$$-Q3 + 3Q1 - IO + 3I2.$$

On a montré ci-dessus que, pour obtenir un filtre dit +Fr/4 il fallait, selon l'invention, multiplier les échantillons complexes X3, X2, X1 et XO par les coefficients respectifs -1, 3j, 3, -j et faire une sommation des résultats des multiplications c'est-à-dire obtenir :

$$-1(I3+jQ3) +3j (I2+jQ2) +3 (I1+jQ1) -j (IO + jQO)$$

soit :

$$-I3 + 3I1 + QO - 3Q2 + j (-Q3 + 3Q1 - IO + 3I2),$$

ce qui correspond pour la partie réelle à la sortie 73 du circuit 67, et pour la partie imaginaire à la sortie 74 du circuit 68.

En ce qui concerne le filtre dit -Fr/4, les coefficients respectifs qui ont été indiqués ci-dessus sont -1, -3j, 3 et j, pour les échantillons complexes X3, X2, X1, et XO. A la sortie du circuit de sommation S' de la figure 4 on obtient :

$$- 1(I3 + jQ3) -3j (I2+jQ2) +3(I1 +jQ1) + j(I0 +jQO)$$

soit :

$$- I3 +3I1 -Q0 +3Q2 + j(-Q3+3Q1+I0-3I2)$$

ce qui correspond pour la partie réelle à la sortie 72 du circuit 66 et pour la partie imaginaire à la sortie 75 du circuit 69.

En conséquence de ce qui précède, le circuit de calcul de module 70 donne donc le module du signal correspondant au filtre +Fr/4 tandis que le circuit 71 donne le module du signal correspondant au filtre -Fr/4. La description qui vient d'être faite en relation avec la figure 7 montre que l'application de l'invention à des cas particuliers de filtres permet d'aboutir à des dispositifs numériques simples, faciles à réaliser et n'utilisant que des circuits élémentaires.

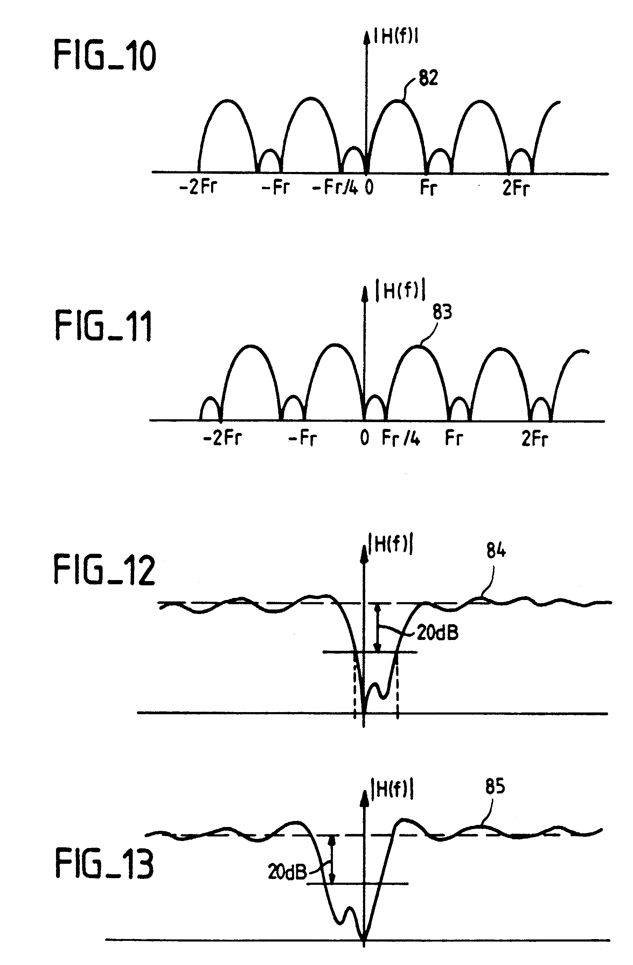

La courbe 80 du diagramme de la figure 8 donne l'allure du module de la fonction de transfert du filtre transverse +Fr/4 en l'absence de wobulation. De même, la courbe 81 du diagramme de la figure 9 donne l'allure du module de la fonction de transfert du filtre transverse -Fr/4 en l'absence de wobulation. Lorsque ces filtres sont précédés d'un filtre d'élimination des échos fixes à une cellule (circuit 47-Figure 4), l'allure du module de la fonction de transfert est donnée par la courbe 82 du diagramme de la figure 10 pour le filtre transverse +Fr/4 tandis que la courbe 83 du diagramme de la figure 1 donne cette allure pour le filtre transverse -Fr/4.

En présence de wobulation, la courbe 84 du diagramme de la figure 12 donne l'allure du module de la fonction de transfert du filtre transverse -Fr/4 tandis que la courbe 85 du diagramme de la figure 13 donne l'allure du module de la fonction de transfert du filtre transverse +Fr/4.

**Revendications**

1. Dispositif d'élimination du fouillis mobile de fréquence Doppler Fd dans un radar Doppler cohérent à impulsions de fréquence de répétition Fr dans lequel les signaux radar sont appliqués simultanément à deux voies de traitement (36, 37) aboutissant à un circuit OU(41) dont l'une (37) comporte un filtre transverse d'élimination du fouillis fixe (42) mettant en oeuvre (n+1) coefficients multiplicateurs A0, A1...Aα...An suivi d'un circuit de seuil (39) tandis que l'autre voie (36) ne comporte qu'un circuit de seuil (38), caractérisé en ce qu'il comprend en outre au moins une troisième voie de traitement (38) aboutissant au circuit OU (41), cette troisième voie comportant un filtre transverse (43) suivi d'un circuit de seuil (40), ledit filtre transverse étant constitué par un banc de circuits multiplicateurs M ou M' dont les coefficients de multiplication K ou K' sont fixes et se déduisent des coefficients AO... Aα... An du filtre d'élimination du fouillis fixe en multipliant ces derniers par un facteur :

$$F\alpha = e^{j2\pi Fd.Tr(n-\alpha)}$$

Tr étant l'inverse de la fréquence de répétition Fr des impulsions.

**2.** Dispositif d'élimination du fouillis mobile selon la revendication 1, dans lequel la fréquence de répétition des impulsions radar émises est wobulée , caractérisé en ce qu'au moins le filtre transverse d'élimination du fouillis mobile est précédé d'un dispositif de compensation de la wobulation qui comprend un circuit multiplicateur qui multiplie le signal radar par un coefficient Wi tel que :

$$Wi = e^{j2\pi Ti.Fr}$$

Ti étant la période en cours de répétition des impulsions lorsque la fréquence de répétition est modulée.

**3.** Dispositif d'élimination du fouillis mobile selon la revendication 1 ou 2 caractérisé en ce que les voies de traitement sont précédées d'un filtre transverse d'élimination des échos fixes

**4.** Dispositif selon l'une quelconque des revendications précédentes 1, 2 ou 3, caractérisé en ce que le filtre transverse d'élimination du fouillis mobile est à une fréquence +Fr/4 et utilise quatre coefficients Kα qui peuvent avoir respectivement les valeurs de l'un des quatre groupes suivants :
- (-j, 3, 3j, -1)
- (1, 3j, -3, -j)
- (j, -3, -3j, 1)
- (-1, -3j, 3, j)

**5.** Dispositif selon l'une quelconque des revendications précédentes 1, 2 ou 3, caractérisé en ce que le filtre transverse d'élimination des échos fixes est à une fréquence -Fr/4 et utilise quatre coefficients K'α qui peuvent avoir respectivement les valeurs de l'un des quatre groupes suivants :
- (j, 3, -3j, -1)
- (1, -3j, -3, j)
- (-j, -3, -3j, 1)
- (-1, 3j, 3, -j)

**6.** Dispositif selon les revendications 4 et 5, adapté au filtrage d'un signal complexe I + jQ dont les composantes sont présentées sous forme de codes numériques successifs séparés par des intervalles de temps Tr, caractérisé en ce qu'il comprend :

- un premier canal pour traiter respectivement les codes successifs de la composante réelle I comportant trois mémoires (52, 54, 56) prévues pour enregistrer tous les codes successifs apparaissant pendant une durée Tr et pour être lues de manière à présenter simultanément, en même temps qu'un code I0 trois autres codes I1, I2, I3 correspondant au même signal à filtrer,
- un deuxième canal pour traiter respectivement les codes successifs de la composante imaginaire Q comportant trois mémoires (53, 55, 57) prévues pour enregistrer tous les codes successifs apparaissant pendant une durée Tr et pour être lues de manière à présenter simultanément, en même temps qu'un code Q0 trois autres codes Q1, Q2, Q3 correspondant au même signal à filtrer,
- des circuits additionneurs (58 à 69) connectés pour recevoir les signaux radar I0 à I3 et Q0 à Q3 fournis respectivement par les premier et deuxième canaux et pour calculer en utilisant l'un des groupes de coefficients de multiplication définis dans les revendications 4 et 5, les parties réelle et imaginaire d'un signal filtré débarrassé du fouillis mobile centré sur +Fr/4 et d'un signal filtré débarrassé du fouillis mobile centré sur -Fr/4, et
- des circuits (70, 71) de calcul de module des signaux filtrés.

**7.** Dispositif selon la revendication 6, caractérisé en ce que les circuits additionneurs (58 à 69) sont prévus pour effectuer les sommes suivantes :

-I3 + 3I1 -Q0 + 3Q2 qui correspond à la partie réelle du signal de sortie du filtre d'élimination du fouillis mobile centré sur +Fr/4,
- Q3 + 3Q1 + I0 - 3I2 qui correspond à la partie imaginaire du signal de sortie du filtre d'élimination du fouillis mobile centré sur +Fr/4,
- I3 + 3I1 + Q0 - 3Q2 qui correspond à la partie réelle du signal de sortie du filtre d'élimination du fouillis mobile centré sur -Fr/4 et,
- Q3 + 3Q1 - I0 + 3I2 qui correspond à la partie imaginaire du signal de sortie du filtre d'élimination du fouillis mobile centré sur -Fr/4.

**Patentansprüche**

**1.** Anordnung zur Beseitigung der beweglichen Störzeichen der Doppler-Frequenz Fd in einem kohärenten Doppler-Radar mit Impulsen der Wiederholfrequenz Fr, in der die Radarsignale gleichzeitig an zwei zu einer ODER-Schaltung (41) führende Verarbeitungswege (36, 37) angelegt werden, wovon einer (37) ein Transversalfilter für die Beseitigung fester Störzeichen (42), das (n + 1) Multiplikationskoeffizienten A0, A1, ..., Aα, ..., An verwendet, enthält, gefolgt von einer Schwellenschaltung (39), während der andere Weg (36) nur eine Schwellenschaltung (38) enthält, dadurch gekennzeichnet, daß sie außerdem wenigstens einen dritten zur ODER-Schaltung (41) führenden Verarbeitungsweg (38) enthält, der ein Transversalfilter (43) enthält, gefolgt von einer Schwellenschaltung (40), wobei das Transversalfilter aus einer Bank von Multiplikationsschaltungen M oder M' gebildet ist, deren Multiplikationskoeffizienten K oder K' fest sind und sich aus den Koeffizienten A0, ..., A$\alpha$, ..., An des Filters für die Beseitigung der festen Störzeichen herleiten, indem diese letzteren mit einem Faktor:

$$F\alpha = e^{j2\pi Fd \cdot Tr(n-\alpha)}$$

multipliziert werden, wobei Tr der Kehrwert der Wiederholfrequenz Fr der Impulse ist.

2. Anordnung zur Beseitigung der beweglichen Störzeichen nach Anspruch 1, in der die Wiederholfrequenz der ausgesendeten Radarimpulse gewobbelt wird, dadurch gekennzeichnet, daß wenigstens dem Transversalfilter zur Beseitigung der beweglichen Störzeichen eine Vorrichtung für die Wobbel-Kompensation vorausgeht, die eine Multiplikationsschaltung enthält, die das Radarsignal mit einem Koeffizienten Wi multipliziert, für den gilt:

$$Wi = e^{j2\pi Ti \cdot Fr}$$

wobei Ti die momentane Impulswiederholperiode ist, wenn die Wiederholfrequenz moduliert wird.

3. Anordnung zur Beseitigung der beweglichen Störzeichen nach Anspruch 1 oder 2, dadurch gekennzeichnet, daß den Verarbeitungswegen ein Transversalfilter zur Beseitigung der festen Echos vorausgeht.

4. Anordnung nach irgendeinem der vorangehenden Ansprüche 1, 2 oder 3, dadurch gekennzeichnet, daß das Transversalfilter zur Beseitigung der beweglichen Störzeichen auf eine Frequenz +Fr/4 zentriert ist und vier Koeffizienten K$\alpha$ verwendet, die jeweils die Werte einer der vier folgenden Gruppen annehmen können:
- (-j, 3, 3j, -1)
- (1, 3j, -3, -j)
- (j, -3, -3j, 1)
- (-1, -3j, 3, j)

5. Anordnung nach irgendeinem der vorangehenden Ansprüche 1, 2 oder 3, dadurch gekennzeichnet, daß das Transversalfilter zur Beseitigung der festen Echos auf eine Frequenz -Fr/4 zentriert ist und vier Koeffizienten K'$\alpha$ verwendet, die jeweils die Werte einer der vier folgenden Gruppen annehmen können:
- (j, 3, -3j, -1)
- (1, -3j, -3, j)
- (-j, -3, -3j, 1)
- (-1, 3j, 3, -j)

6. Anordnung nach den Ansprüchen 4 und 5, die an die Filterung eines komplexen Signals I + jQ angepaßt ist, dessen Komponenten in Form aufeinanderfolgender digitaler Codes dargestellt sind, die durch Zeitintervalle Tr getrennt sind, dadurch gekennzeichnet, daß sie enthält:

- einen ersten Kanal zum Verarbeiten der jeweiligen aufeinanderfolgenden Codes des Realteils I, mit drei Speichern (52, 54, 56), die für die Aufzeichnung sämtlicher während einer Dauer Tr auftretender, aufeinanderfolgender Codes vorgesehen sind und in der Weise gelesen werden, daß sie zur gleichen Zeit wie ein Code IO gleichzeitig drei weitere Codes I1, I2, I3, die demselben zu filternden Signal entsprechen, aufweisen,
- einen zweiten Kanal zum Verarbeiten der jeweiligen aufeinanderfolgenden Codes des Imaginärteils Q, mit drei Speichern (53, 55, 57), die für die Aufzeichnung sämtlicher während einer Dauer Tr auftretender, aufeinanderfolgender Codes vorgesehen sind und in der Weise gelesen werden, daß sie zur gleichen Zeit wie ein Code Q0 gleichzeitig drei weitere Codes Q1, Q2, Q3, die demselben zu filternden signal entsprechen, aufweisen,
- Addiererschaltungen (58 bis 69), die so angeschlossen sind, daß sie die von dem ersten bzw. dem zweiten Kanal gelieferten Radarsignale I0 bis I3 und Q0 bis Q3 empfangen und unter Verwendung einer der Gruppen von Multiplikationskoeffizienten, die in den Ansprüchen 4 und 5 definiert sind, die Real- und Imaginärteile eines gefilterten Signals, das von den beweglichen Störzeichen befreit ist und auf +Fr/4 zentriert ist, und eines gefilterten Signals, das von den beweglichen Störzeichen befreit ist und auf -Fr/4 zentriert ist, berechnen, und
- Schaltungen (70, 71) zum Berechnen des Betrags der gefilterten Signale.

7. Anordnung nach Anspruch 6, dadurch gekennzeichnet, daß die Addiererschaltungen (58 bis 69) dazu vorgesehen sind, die folgenden Summen zu bilden:

- I3 + 3I1 - Q0 + 3Q2, die dem Realteil des Ausgangssignals des Filters zur Beseitigung der beweglichen Störzeichen, das auf +Fr/4 zentriert ist, entspricht,
- Q3 + 3Q1 + I0 - 3I2, die dem Imaginärteil des Ausgangssignals des Filters zur Beseitigung der beweglichen Störzeichen, das auf +Fr/4 zentriert ist, entspricht,
- I3 + 3I1 + Q0 - 3Q2, die dem Realteil des Ausgangssignals des Filters zur Beseitigung der beweglichen Störzeichen, das auf -Fr/4 zentriert ist, entspricht, und

- Q3 + 3Q1 - I0 + 3I2, die dem Imaginärteil des Ausgangssignals des Filters zur Beseitigung der beweglichen Störzeichen, das auf -Fr/4 zentriert ist, entspricht.

## Claims

1. Device for eliminating moving clutter with a Doppler shift Fd in a coherent Doppler radar with pulse repetition frequency Fr, wherein the radar signals are applied simultaneously to two processing pathways (36, 37) leading to an OR circuit (41), one (37) of which includes a fixed-clutter elimination transversal filter (42) using (n+1) multiplying coefficients A0, A1, ..., Aα, ..., An followed by a threshold circuit (39), whilst the other pathway (36) includes only a threshold circuit (38), characterized in that it further includes at least one third processing pathway (38) leading to the OR circuit (41), this third pathway including a transversal filter (43), followed by a threshold circuit (40), the said transversal filter being composed of a bank of multiplier circuits M or M' whose multiplying coefficients K or K' are fixed and are derived from the coefficients A0, ..., Aα, ..., An of the fixed-clutter elimination filter by multiplying them by a factor:

$$F\alpha = e^{j2\pi Fd.Tr(n-\alpha)}$$

Tr being the inverse of the pulse repetition frequency Fr.

2. Device for eliminating moving clutter according to Claim 1, wherein the repetition frequency of the transmitted radar pulses is wobulated, characterized in that at least the moving-clutter elimination transversal filter is preceded by a wobulation compensating device that includes a multiplier circuit which multiplies the radar signal by a coefficient Wi such that:

$$Wi = e^{j2\pi Ti.Fr}$$

Ti being the current pulse repetition period when the repetition frequency is modulated.

3. Device for eliminating moving clutter according to Claim 1 or 2, characterized in that the processing pathways are preceded by a fixed-echos elimination transversal filter.

4. Device according to any one of the preceding Claims 1, 2 and 3, characterized in that the moving-clutter elimination transversal filter is at a frequency +Fr/4 and uses four coefficients Kα that may respectively have the values of one of the four following groups:

- (-j, 3, 3j, -1)
- (1, 3j, -3, -j)
- (j, -3, -3j, 1)
- (-1, -3j, 3, j).

5. Device according to any one of the preceding Claims 1, 2 and 3, characterized in that the fixed-echos elimination transversal filter is at a frequency -Fr/4 and uses four coefficients K'α that may respectively have the values of one of the four following groups:

- (j, 3, -3j, -1)
- (1, -3j, -3, j)
- (-j, -3, -3j, 1)
- (-1, 3j, 3, -j).

6. Device according to Claims 4 and 5, intended for filtering a complex signal I + jQ whose components are presented in the form of successive digital codes separated by time intervals Tr, characterized in that it includes:

- a first channel to process respectively the successive codes of the real component I including three memories (52, 54, 56) provided to record all the successive codes appearing over a duration Tr and to be read out so as to present simultaneously, at the same time as a code I0, three other codes I1, I2, I3 corresponding to the same signal to be filtered;
- a second channel to process respectively the successive codes of the imaginary component Q including three memories (53, 55, 57) provided to record all the successive codes appearing over a duration Tr and to be read out so as to present simultaneously, at the same time as a code Q0, three other codes Q1, Q2, Q3 corresponding to the same signal to be filtered;
- adder circuits (58 to 69) connected so as to receive the radar signals I0 to I3 and Q0 to Q3 delivered respectively by the first and second channels and so as to compute, using one of the groups of multiplying coefficients defined in Claims 4 and 5, the real and imaginary parts of a filtered signal rid of the moving clutter centred on +Fr/4 and of a filtered signal rid of the moving clutter centred on -Fr/4 and
- circuits (70, 71) for computing the modulus of the filtered signals.

7. Device according to Claim 6, characterized in that the adder circuits (58 to 69) are provided for computing the following sums:

-I3 + 3I1 - Q0 + 3Q2 which corresponds to the real part of the output signal from the filter for eliminating moving clutter centred on +Fr/4;
-Q3 + 3Q1 + I0 - 3I2 which corresponds to the imaginary part of the output signal from the filter for eliminating moving clutter centred on +Fr/4;
-I3 + 3I1 + Q0 - 3Q2 which corresponds to the real part of the output signal from the filter for eliminating moving clutter centred on -Fr/4 and
-Q3 + 3Q1 - I0 + 3I2 which corresponds to the imaginary part of the output signal from the filter for eliminating moving clutter centred on -Fr/4.

# FIG_1

# FIG_2

# FIG_3

# FIG_4

FIG_5

FIG_6

FIG_8

FIG_9

FIG_7

Voie
I

Mémoire
1 radiale — 52
Mémoire
1 radiale — 54
Mémoire
1 radiale — 56

50

I0    I1    I2    I3

58    +    +    60

3I1

62

66    72

67    73

Q0
3Q1    63

3I2
I0
64

68    70

Calcul
module
(+Fr/4)

3Q1    65

69    74

Calcul
module
(−Fr/4)    71

75

59    3×Q1
61    +
+

Voie
Q
Q0

Mémoire
1radiale — 53
Mémoire
1 radiale — 55
Mémoire
1 radiale — 57

51

Q1    Q2    Q3

FIG_10

FIG_11

FIG_12

FIG_13